# EUROPÄISCHE PATENTANMELDUNG

(11) **EP 3 916 944 A1**
(43) Veröffentlichungstag der Anmeldung: **01.12.2021**
(21) Anmeldenummer: 20176804.1
(22) Anmeldetag: 27.05.2020
(51) Int. Cl.: H02J 3/12

(54) **VERFAHREN ZUM BETREIBEN EINES ENERGIEVERSORGUNGSSYSTEMS UND ENERGIEVERSORGUNGSSYSTEM**

(71) Anmelder: Siemens Aktiengesellschaft, 80333 München (DE)
(72) Erfinder: Schulte, Sascha, 91088 Bubenreuth (DE)

(57) **Zusammenfassung**

Die Erfindung betrifft ein Energieversorgungssystem und ein Verfahren zum Betreiben eines Energieversorgungssystems. Das Energieversorgungssystem umfasst wenigstens ein erstes Energie Subsystem mit wenigstens einem ersten elektrischen Verbraucher und wenigstens einem ersten elektrischen Erzeuger. Diese sind miteinander elektrisch verbunden. Der erste elektrische Verbraucher und der erste elektrische Erzeuger umfassen jeder eine Schalteinheit. Die Schalteinheit umfasst eine Messeinheit und eine Steuereinheit. In der Messeinheit wird die lokale Netzspannung gemessen und Netzspannungsdaten erzeugt. Die Netzspannungsdaten werden an die Steuereinheit übertragen. In der Steuereinheit werden die Netzspannungsdaten ausgewertet und eine Netzspannung Sollwertabweichung in der Steuereinheit ermittelt. Die jeweilige umfasste Steuereinheit steuert in Abhängigkeit der Netzspannung Sollwertabweichung den ersten elektrischen Verbraucher und/oder den ersten elektrischen Erzeuger.

## Beschreibung

Die Erfindung betrifft ein Verfahren zum Betreiben eines Energieversorgungssystems und ein Energieversorgungssystem.

Das Energieversorgungsnetz wird regional und überregional heutzutage hoch dynamisch belastet. Zum einen steigt der Anteil der erneuerbaren Energieerzeuger, insbesondere der Fotovoltaik-Anlagen und der Windkraftwerke. Zum anderen wechselt der Bedarf der Verbraucher, insbesondere auch der Verbrauch der privaten Netzteilnehmer aufgrund von Ladevorgängen elektrischer Kraftfahrzeuge, in immer größerem Maße.

Zur Wahrung der Netzstabilität existieren verschiedene Regelwerke und manuell gesteuerte Leitwarten, mit denen Energieversorger Angebot und Nachfrage in Deckung bringen. Eine Methode zur Netzstabilisierung beruht auf Frequenzmessungen. Es ist bekannt, die aktuelle Netzfrequenz in dem Energieversorgungsnetz zu bestimmen und hieraus die in das Energieversorgungsnetz einzuspeisende und/oder die aus dem Energieversorgungsnetz zu entnehmende elektrische Leistung zu bestimmen. Dies wird auch als Primärregelleistung bezeichnet. Auf diese Weise kann ein Ungleichgewicht zwischen einem physikalischen Leistungsangebot und einer Leistungsnachfrage ausgeglichen werden. Ferner kann die Netzfrequenz auf eine vorbestimmte Nennfrequenz geregelt werden.

Nachteilig werden lokal eng begrenzte Überlasten oder Unterlasten nicht erkannt, da die Netzfrequenz nur Lastungleichheiten anzeigt, die sehr großflächig auftreten, insbesondere wenn ein ganzes Kraftwerk betroffen ist. Nachteilig kann das Energieversorgungsnetz lokal instabil sein, ohne dass die Netzfrequenz großflächig von einem Sollwert abweicht.

Aufgabe der vorliegenden Erfindung ist es daher, ein Verfahren zum Betreiben eines Energieversorgungssystems und ein Energieversorgungssystem anzugeben, welche ein lokal stabiles Energieversorgungssystem gewährleisten.

Die Aufgabe wird erfindungsgemäß mit einem Verfahren zum Betreiben eines Energieversorgungssystems gemäß Anspruch 1 und einem Energieversorgungssystem gemäß Anspruch 10 gelöst.

Das erfindungsgemäße Verfahren zum Betreiben eines Energieversorgungssystems umfasst mehrere Schritte. Zunächst erfolgt das Bereitstellen des Energieversorgungssystems mit wenigstens einem ersten Energiesubsystem mit wenigstens einem ersten elektrischen Verbraucher und wenigstens einem ersten elektrischen Erzeuger. Der erste elektrische Verbraucher und erste elektrische Erzeuger sind miteinander elektrisch verbunden der erste elektrische Verbraucher und der erste elektrische Erzeuger umfassen jeder eine Schalteinheit. Die Schalteinheit umfasst wiederum eine Messeinheit und eine Steuereinheit. In der Messeinheit wird die lokale Netzspannung gemessen und Netzspannungsdaten erzeugt. Die Netzspannungsdaten werden an die Steuereinheit übertragen. In der Steuereinheit werden die Netzspannungsdaten ausgewertet und eine Netzspannungssollwertabweichung ermittelt. Der erste elektrische Verbraucher und/oder der erste elektrische Erzeuger werden in Abhängigkeit der Netzspannungssollwertabweichung durch die jeweilig umfasste Steuereinheit gesteuert.

Das erfindungsgemäße Energieversorgungssystem umfasst wenigstens ein erstes Energiesubsystem und das Energiesubsystem umfasst wenigstens einen ersten elektrischen Verbraucher und wenigstens einen ersten elektrischen Erzeuger, wobei der erste elektrische Verbraucher und der erste elektrische Erzeuger miteinander elektrisch verbunden sind. Der erste elektrische Verbraucher und der erste elektrische Erzeuger umfassen jeder eine Schalteinheit. Die Schalteinheit umfasst eine Messeinheit und eine Steuereinheit. Die Messeinheit ist ausgestaltet, eine lokale Netzspannung zu messen und Netzspannungsdaten zu erzeugen. Die Messeinheit ist weiterhin ausgestaltet, die Netzspannungsdaten an die Steuereinheit zu übertragen. Die Steuereinheit ist ausgestaltet, die Netzspannungsdaten auszuwerten und eine Netzspannungssollwertabweichung zu ermitteln. Weiterhin ist die Steuereinheit ausgestaltet jeweils ihren ersten elektrischen Verbraucher und/oder ersten elektrischen Erzeuger in Abhängigkeit der Netzspannungssollwertabweichung anzusteuern.

Als Energiesubsystem wird insbesondere der Teil eines Energieversorgungssystems gesehen, der nicht von einem Energieversorger betrieben wird, sondern ein privates Netz, insbesondere eine Hausinstallation oder eine Gebäudeverbundinstallation, darstellt.

Die Erfindung schlägt vor, die Netzstabilität nicht, wie im Stand der Technik mittels der Netzfrequenz, sondern mittels lokal gemessener Netzspannungen zu analysieren. Die Netzspannung wird innerhalb des Energiesubsystem sowohl bei Energieverbrauchern wie auch bei Energieerzeugern gemessen. Dies ist möglich, da sowohl Energieverbraucher als auch Energieerzeuger eine Schalteinheit aufweisen, welche eine Messeinheit und eine Steuereinheit umfasst. Vorteilhaft ist es somit möglich, die Netzspannung lokal an den Verbrauchern und Erzeugern selbst zu messen und analysieren. Der Verbraucher oder Erzeuger selbst reagiert, in Abhängigkeit der gemessenen Netzspannung, in dem er selbst elektrische Energie verbraucht oder erzeugt. In anderen Worten ist es vorteilhaft innerhalb eines Energiesubsystem nicht notwendig, dass der Verbraucher oder Erzeuger von einer externen Steuereinheit gesteuert wird, sondern der Verbraucher und/oder Erzeuger gleicht Schwankungen in der Netzspannung im lokalen Energienetz direkt selbst aus. Vorteilhaft erhöht ein Ausgleich der Netzspannung vieler einzelner Komponenten, also Verbraucher und Erzeuger, die Versorgungsstabilität und die Zuverlässigkeit des Energieversorgungssystems. Insbesondere werden Schwankungen innerhalb des Energiesubsystem ausgeglichen.

In einer vorteilhaften Ausgestaltung und Weiterbildung der Erfindung beschreibt die Netzspannungssollwertabweichung ein Über- oder Unterschreiten einer vordefinierten Netzspannung oder eines Stabilitätsspannungsbereichs. Vorteilhaft kann die vordefinierte Netzspannung oder der Stabilitätsspannungsbereichs auf nationale Netzspannungen angepasst werden.

In einer weiteren vorteilhaften Ausgestaltung und Weiterbildung der Erfindung weist das Energieversorgungssystem ein zweites Energiesubsystem auf. Das zweite Energiesubsystem umfasst wenigstens einen zweiten elektrischen Verbraucher und wenigstens einen zweiten elektrischen Erzeuger, die miteinander elektrisch verbunden sind. Der zweite elektrische Verbraucher und der zweite elektrische Erzeuger umfassen jeder eine Schalteinheit. Die Schalteinheiten umfassen eine Messeinheit und eine Steuereinheit. In der Schalteinheit wird die lokale Netzspannung gemessen Netzspannungsdaten erzeugt die Netzspannungsdaten werden an die Steuereinheit übertragen. In der Steuereinheit werden die Netzspannungsdaten ausgewertet und eine Netzspannung Sollwertabweichung in der Steuereinheit ermittelt. Der zweite elektrische Verbraucher und/oder der zweite elektrische Erzeuger werden in Abhängigkeit der Netzspannung Sollwertabweichung durch die jeweilige Steuereinheit gesteuert.

Vorteilhaft ist es möglich, wenigstens zwei Energiesubsysteme mittels des Messens der Netzspannung in ihrer Stabilität zu charakterisieren und durch den lokalen Einsatz von Erzeugern und Verbrauchern zu stabilisieren, falls die Netzspannungssollwertabweichung einen definierten Wert überschreitet oder unterschreitet oder außerhalb eines definierten Bereichs liegt. Sowohl die ersten und zweiten Erzeuger als auch die ersten und zweiten Verbraucher werden lokal über die Steuereinheit gesteuert, welche in der Schalteinheit umfasst sind, welche sie selbst aufweisen. Somit kann vorteilhaft ein dezentrales Stabilisieren des Energieversorgungssystems erfolgen.

In einer weiteren vorteilhaften Ausgestaltung und Weiterbildung der Erfindung umfasst das erste und/oder das zweite Energiesubsystem wenigstens eine Energiespeichereinheit mit einer Schalteinheit, die eine Messeinheit und eine Steuereinheit umfasst die Energiespeichereinheit wird in Abhängigkeit der Netzspannungssollwertabweichung geladen oder entladen. Vorteilhaft wird auch die Energiespeichereinheit dezentral mittels der Schalteinheit, welche in der Energiespeichereinheit umfasst ist, gesteuert. Vorteilhaft wird somit die Netzspannung lokal innerhalb des Energiesubsystem bei einer Netzspannung Sollwertabweichung korrigiert ohne direkt in das physikalische Stromnetz des Energieversorgers eingreifen zu müssen.

In einer weiteren vorteilhaften Ausgestaltung und Weiterbildung der Erfindung umfasst das Energieversorgungssystem eine zentrale Steuereinheit die zentrale Steuereinheit ist mit dem ersten Energiesubsystem und mit dem zweiten Energiesubsystem verbunden. In Abhängigkeit der Netzspannungssollwertabweichung erfolgt ein Ansteuern der ersten und/oder zweiten Verbraucher und/oder der ersten und/oder zweiten Erzeuger und/oder der Energiespeichereinheit durch die zentrale Steuereinheit. Vorteilhaft ist es somit möglich einen übergeordnete Regelschleife zu realisieren, um eine Überkorrektur durch das selbstständige Steuern der einzelnen Komponenten zu vermeiden.

In einer weiteren vorteilhaften Ausgestaltung und Weiterbildung der Erfindung kommunizieren das erste Energiesubsystem und das zweite Energiesubsystem über eine zentrale Kommunikationseinheit oder Peer-to-Peer miteinander. Peer-to-Peer bedeutet in anderen Worten, dass eine Rechner-Rechner-Verbindung zwischen den Komponenten der Energiesubsysteme besteht, über die eine Kommunikation vorteilhaft möglich ist. Die zentrale Kommunikationseinheit kann mit der zentralen Steuereinheit integriert ausgebildet sein.

In einer weiteren vorteilhaften Ausgestaltung und Weiterbildung der Erfindung werden in Abhängigkeit der Netzspannung Sollwertabweichung wenigstens zwei Erzeuger, Verbraucher und/oder Energiespeicher durch die zentrale Steuereinheit angesteuert. Es ist somit mittels der zentralen Steuereinheit vorteilhaft möglich eine Korrektur der Netzspannung aus mehreren Komponenten zu realisieren. Weiterhin kann mittels der zentralen Steuereinheit auch eine Gruppenansteuerung erfolgen. D. h. in anderen Worten, dass die zentrale Steuereinheit insbesondere mehrere Verbraucher oder mehrere Erzeuger oder mehrere Energiespeichereinheiten zeitgleich ansteuert, um eine Korrektur der Netzspannung herbeizuführen. Dies ist insbesondere dann vorteilhaft, wenn mehrere benachbarte Energiesubsysteme eine Netzspannung gemeinsam korrigieren.

In einer weiteren vorteilhaften Ausgestaltung und Weiterbildung der Erfindung sind das erste Energiesubsystem und das zweite Energiesubsystem lokal benachbart. In Abhängigkeit der Netzspannung Sollwertabweichung stellen das erste Energiesubsystem und das zweite Energiesubsystem sich gegenseitig elektrischer Energie bereit oder nehmen diese ab. Vorteilhaft erfolgt der Ausgleich der Netzspannung zur Stabilisierung des lokalen die Versorgungssystems verteilt auf mehrere Komponenten des Energieversorgungssystems, was im Durchschnitt eine ausgeglichene Korrektur und somit eine erhöhte Stabilität der Netzspannung erreicht.

In einer weiteren vorteilhaften Ausgestaltung und Weiterbildung der Erfindung werden der zentralen Steuereinheit Netzinfrastrukturdaten bereitgestellt auf Basis der Netzinfrastrukturdaten wird eine lokale Zuordnung der Netzspannungsdaten in dem Energieversorgungssystem durchgeführt. Als Netzinfrastrukturdaten werden insbesondere Ortskoordinaten oder Gebäudepläne verstanden. Vorteilhaft ist es möglich, Netzinfrastrukturdaten und Messdaten zu korrelieren und daraus Informationen über die Netzinfrastruktur, insbesondere überwiegend überlastete Stromleitungen, zu erhalten.

In einer weiteren vorteilhaften Ausgestaltung und Weiterbildung der Erfindung ist die Schalteinheit ein Umrichter, insbesondere ein leistungselektronischer Umrichter. Insbesondere kann die Schalteinheit nicht nur offen oder geschlossen, also an oder aus, schalten, sondern auch graduelle Zwischenwerte einstellen.

In einer weiteren vorteilhaften Ausgestaltung und Weiterbildung der Erfindung sind das erste und/oder das zweite Energiesubsystem ein Gebäude, ein Wohnviertel oder ein elektrisch zusammenhängendes Gebäudenetz. Als Wohnviertel wird hier insbesondere ein Zusammenschluss mehrerer Gebäude, wie ein Bauernhof oder eine Siedlung mit einem Blockheizkraftwerk, verstanden. Insbesondere sind die elektrischen Verbraucher, Erzeuger und Energiespeichereinrichtungen innerhalb eines Energiesubsystems nicht dem Energieversorgernetz zuzuordnen, sondern liegen in der Verantwortung privater Eigentümer. Vorteilhaft ermöglicht die Korrektur der Netzspannung mittels der lokalen Schalteinheiten eine Stabilitätserhöhung des Energieversorgungssystems mit einem lediglich indirekten Eingreifen in das Stromversorgungsnetz des Energieversorgers, insbesondere erfolgt ein Eingriff nicht über das Anpassen von Kraftwerksleistung oder Zuschalten von Gaskraftwerken.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: ein Energieversorgungssystem mit einem ersten Energiesubsystem;
- Figur 2: ein Energieversorgungssystem mit einem ersten Energiesubsystem und einem zweiten Energiesubsystem;
- Figur 3: ein Verfahrensschema zum Betreiben des Energieversorgungssystems.

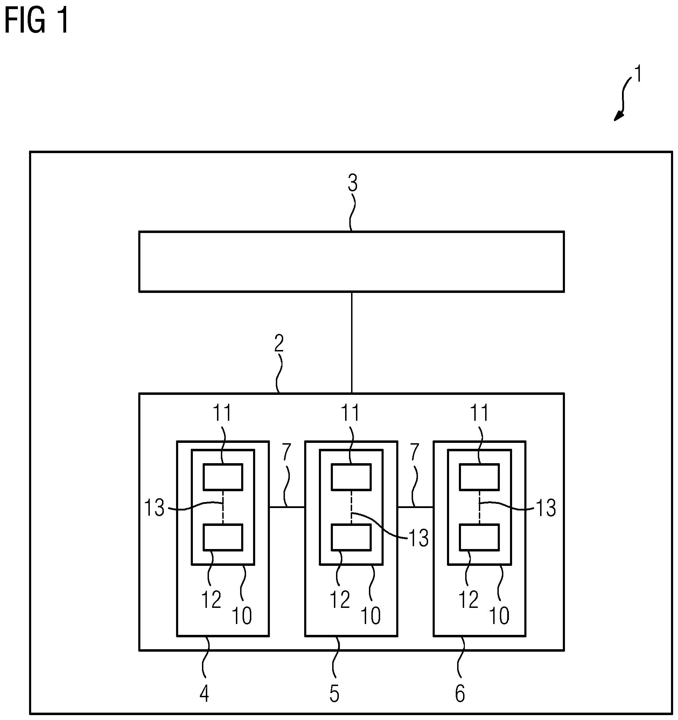

Figur 1 zeigt ein Energieversorgungssystem 1 mit einem ersten Energiesubsystem 2. Das Energieversorgungssystem 1 umfasst das erste Energiesubsystem 2 und ein Energieversorgernetz 3. als Energieversorgernetz 3 wird insbesondere das Stromnetz verstanden, welches von Energieversorgern betrieben wird, wobei diese in dem Energieversorgernetz 3 auch großtechnische Kraftwerke betreiben. In diesem Beispiel sind das Energieversorgernetz 3 und das erste Energiesubsystem über eine elektrische Anbindungsleitung 30 elektrisch mit einander verbunden.

Das erste Energiesubsystem 2 umfasst einen ersten elektrischen Verbraucher 4, einen ersten elektrischen Erzeuger 5 und eine erste Energiespeichereinheit 6. In der Realität umfasst das erste Energiesubsystem 2 üblicherweise mehrere Erzeuger, Verbraucher und Energiespeicher. Vereinfacht ist in dem ersten Energiesubsystem 2 in diesem Beispiel jeweils nur ein Verbraucher, ein Erzeuger und eine Energiespeichereinheit dargestellt. Als erster elektrischer Verbraucher 4 werden in diesem Beispiel insbesondere Haushaltsgeräte, elektrische Fahrzeuge oder elektrische Heizungen eingesetzt. Als erster elektrischer Erzeuger 5 werden in diesem Beispiel insbesondere Fotovoltaikanlagen, Blockheizkraftwerke, Biogasanlagen oder Windkraftanlgen eingesetzt. Als eine erste Energiespeichereinheit 6 wird insbesondere ein wiederaufladbarer Batteriespeicher eingesetzt. Der erste elektrische Verbraucher 4, der erste elektrische Erzeuger 5 und die erste Energiespeichereinheit 6 sind jeweils über eine elektrische Leitung 7 miteinander verbunden.

Der erste elektrische Verbraucher 4, der erste elektrische Erzeuger 5 und die erste Energiespeichereinheit 6 umfassen jeweils eine Schalteinheit 10. Die Schalteinheit 10 umfasst eine Messeinheit 11 und eine Steuereinheit 12. Die Steuereinheit 12 und die Messeinheit 11 sind über eine Datenübertragungsleitung 13 miteinander verbunden.

In jeder der Messeinheiten 11 wird die lokale Netzspannung, insbesondere die Spannung an den elektrischen Leitungen 7, gemessen und daraus Netzspannungsdaten in der Messeinheit 11 erzeugt. Die Netzspannungsdaten werden an die jeweilige Steuereinheit 12 übertragen. Jede Steuereinheit 12 wertet die Netzspannungsdaten aus und ermittelt einen Netzspannungssollwertabweichung. Insbesondere wird als Sollwert für die Netzspannung ein Wert einer Netzvorschift (engl.: "grid code"), insbesondere von 230 V in Teilen Europas oder von 110 V in den Vereinigten Staaten von Amerika, an die Steuereinheit 12 übermittelt.

In Abhängigkeit der Netzspannunssollwertabweichung steuert die Steuereinheit 12 die Komponente, der sie zugeordnet ist, also den ersten elektrischen Verbraucher 4, den ersten elektrischen Erzeuger 5 oder die erste Energiespeichereinheit 6. Vorteilhaft wird die Netzspannung somit lokal in den Komponenten, also den Verbrauchern, Erzeugern und Energiespeichereinheiten, bestimmt und einer Netzspannungsabweichung lokal entgegengewirkt. Fällt eine der Messeinheiten 11 oder der Steuereinheit 12 aus, so ist das korrigieren der Netzspannung dennoch über die weiteren Komponenten möglich. In diesem Beispiel korrigieren die Komponenten unabhängig voneinander die Netzspannungsabweichungen.

Insbesondere wird durch das dezentrale Abfangen von Netzspannungsabweichungen vorteilhaft einer Überlastung der Anbindungsleitung 30 entgegengewirkt. Eine Überlastung der Anwendungsleitung 30 kann insbesondere dann erfolgen, wenn innerhalb des ersten Energiesubsystem 2, in diesem Beispiel einem Wohnviertel, viele Energieverbraucher, wie insbesondere elektrische Fahrzeuge, die Anbindungsleitung 30 kritisch belasten.

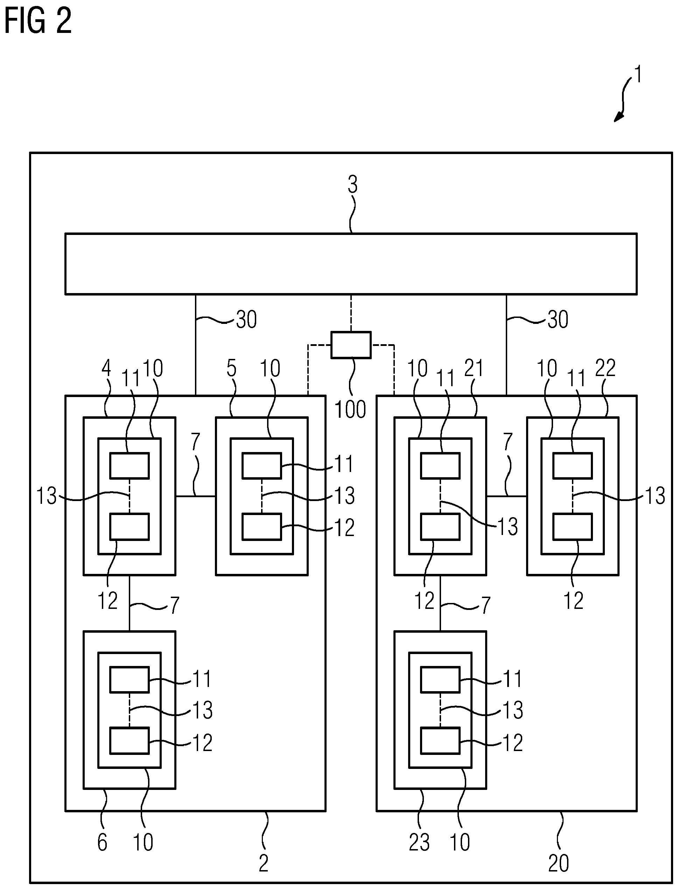

Figur 2 zeigt der Energieversorgungssystem 1 mit einem ersten Energiesubsystem 2 und einem zweiten Energiesubsystem 20. Das erste Energiesubsystem 2 entspricht dem ersten Energiesubsystem 2 aus dem ersten Beispiel. Das zweite Energiesubsystem 20 umfasst einen zweiten elektrischen Verbraucher 21, einen zweiten elektrischen Erzeuger 22 und eine zweite Energiespeichereinheit 23. das zweite Energiesubsystem 2 stellt insbesondere einen Gebäudekomplex, insbesondere einen Bürogebäudekomplex dar. Der Gebäudekomplex verfügt über ein eigenes elektrisches Leitungssystem und ist über eine Anbindungsleitung 30 an das Energieversorgernetz 3 angeschlossen. Als zweiter elektrischer Verbraucher 21 werden in diesem Beispiel insbesondere Klimaanlagen, elektrische Heizungen oder Servereinheiten verstanden. Als zweiter elektrischer Erzeuger 22 wird eine Photovoltaikanlage, eine Windkraftanlage oder ein Blockheizkraftwerk eingesetzt. Als eine zweite Energiespeichereinheit 23 wird insbesondere eine wiederaufladbare Batterie verstanden. Es ist aber ebenso denkbar, dass eine Energiespeicherung über chemische Speicherstoffe, insbesondere Wasserstoff, erfolgt. Dann umfasst die zweite Energiespeichereinheit 23 insbesondere einen Elektrolyseur und eine Brennstoffzelle. Dass eine fiktive Versorgungssystem 1 des zweiten Beispiels umfasst weiterhin eine zentrale Steuereinheit 100. Diese Steuereinheit 100 ist mittels Datenübertragungsleitungen mit dem ersten Energiesubsystem 2, dem zweiten Energiesubsystem 20 sowie dem Energieversorgernetz 3 verbunden. Wie bereits im ersten Ausführungsbeispiel beschrieben, werden in jeder der Komponenten, also in den Erzeugern, Verbrauchern und Speichereinheiten, in einer Schalteinheit Messwerte aufgenommen und mit einem Sollwert der Netzspannung abgeglichen. Bei einer Abweichung von einer vorgegebenen Netzspannung werden die jeweiligen Komponenten von der Steuereinheit, die sie selbst umfassen, angesteuert, um die Abweichung von der vorgegebenen Netzspannung zu korrigieren. Zusätzlich wird diese Steuerung nun mittels einer zentralen Steuereinheit 100 überwacht und gegebenenfalls korrigiert. Die zentrale Steuereinheit 100 stellt somit vorteilhaft eine übergeordnete Regelschleife dar, die es ermöglicht Überkorrekturen, in anderen Worten eine Übersteuerung, der Netzspannung zu vermeiden.

Das bewirkt vorteilhaft insbesondere, dass die Energiesubsysteme sich gegenseitig schützen. In diesem Beispiel sind die zwei Energiesubsysteme 2, 20 mit jeweils einem langen Kabel 30 über einen gemeinsamen Knotenpunkt mit dem Energieversorgernetz 3 verbunden. Das erste Energiesubsystem 2 arbeitet normal, das zweite Energiesubsystem 20 überlastet das Kabel und hat daher eine zu geringe Spannung. An dem Knotenpunkt ist die Spannung normal. Mit zunehmender Distanz sinkt die Spannung bis zu dem zweiten Verbraucher 21, der die Überlast verursacht, ab. Wenn nun ein erster, normal arbeitender Erzeuger 5 des ersten Energiesubsystems 2 eine Über-Einspeisung ausführt, steigt dessen lokale Spannung leicht an. Die elektrische Leistung wird dann dem zweiten Verbraucher 21 durch den Knotenpunkt zugeführt. Das Energieversorgernetz 3 wird somit vorteilhaft nicht, bzw. schwächer, belastet. In einigen Konstellationen könnte der erste Energieerzeuger 5 sogar so viel Leistung einspeisen, dass die Spannung bis zum Knotenpunkt leicht ansteigt, so dass sie beim zweiten Verbraucher 21 ebenfalls etwas angehoben wird. Damit würde die Spannung beim zweiten Verbraucher 21 also wieder in einen erlaubten Bereich gedrängt, da das Spannungs-Delta zum Knotenpunkt zwar erhalten bleibt, die Ausgangsspannung am Knotenpunkt aber höher war und damit die Endspannungen ebenfalls weniger stark sinkt.

Weiterhin ist es vorteilhaft mittels der zentralen Steuereinheit 100 möglich, mehrere Gruppen von elektrischen Verbrauchern, Erzeugern und/oder Speichereinheiten anzusteuern.

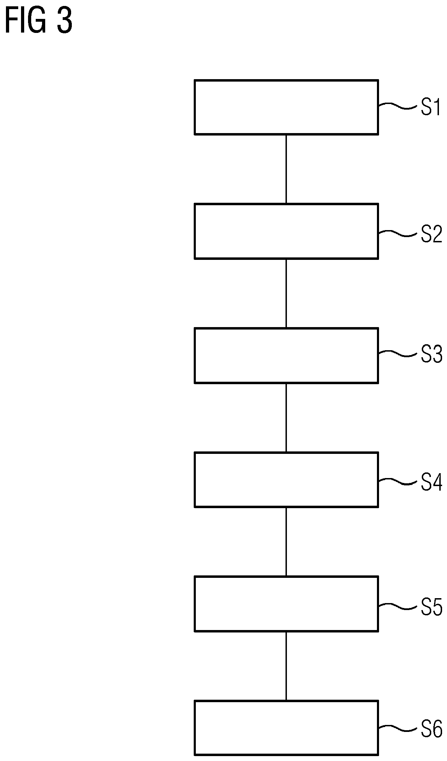

Figur 3 zeigt ein Verfahrensschema zum Betreiben eines Energieversorgungssystems 1. In einem ersten Schritt S 1 erfolgt das Bereitstellen des Energieversorgungssystems 1.

Das Energieversorgungssystem 1 umfasst wenigstens einen Energieerzeuger, einen Energieverbraucher und eine Energiespeichereinheit. Diese umfassen jeweils eine Schalteinheit 10, wobei die Schalteinheit 10 eine Messeinheit 11 und eine Steuereinheit 12 umfasst. In einem zweiten Schritt S 2 wird in einer Messeinheit 11 die lokale Netzspannung gemessen. In einem dritten Schritt S 3 werden in der Messeinheit 11 Netzspannungsdaten erzeugt. Diese werden in einem vierten Schritt S 4 an die Steuereinheit 12 übertragen. In einem fünften Schritt S 5 werden die Netzspannungsdaten ausgewertet. Auf Basis eines vorgegebenen Sollwerts der Netzspannung wird eine Netzspannungsollwertabweichung ermittelt. Der Verbraucher, der Erzeuger und/oder die Speichereinheit werden in Abhängigkeit der Netzspannung Sollwertabweichung von der jeweiligen eigenen Steuereinheit 12 angesteuert. Somit wird vorteilhaft die Netzspannung lokal korrigiert.

### Bezugszeichenliste

- 1: Energieversorgungssystem
- 2: erstes Energiesubsystem
- 3: Energieversorgernetz
- 4: erster elektrischer Verbraucher
- 5: erster elektrischer Erzeuger
- 6: erste Energiespeichereinheit
- 7: elektrische Leitung
- 10: Schalteinheit
- 11: Messeinheit
- 12: Steuereinheit
- 13: Datenübertragungsleitung
- 20: zweites Energiesubsystem
- 21: zweiter elektrischer Verbraucher
- 22: zweiter elektrischer Erzeuger
- 23: zweite Energiespeichereinheit
- 30: elektrische Anbindungsleitung
- 100: zentrale Steuereinheit

- S1: Bereitstellen des Energieversorgungssystems
- S2: Messen der lokalen Netzspannung
- S3: Erzeugen von Netzspannungsdaten
- S4: Übertragen der Netzspannungsdaten
- S5: Auswerten der Netzspannungsdaten und Ermitteln einer Netzspannungssollwertabweichung
- S6: Steuern des Verbrauchers und/oder Erzeugers in Abhängigkeit der Netzspannungssollwertabweichung

## Patentansprüche

1. Verfahren zum Betreiben eines Energieversorgungssystems (1) mit folgenden Schritten:
- Bereitstellen des Energieversorgungssystems (1) mit wenigstens einem ersten Energiesubsystem (2) mit wenigstens einem ersten elektrischen Verbraucher (4) und wenigstens einem ersten elektrischen Erzeuger (5), die miteinander elektrisch verbunden sind, wobei der erste elektrische Verbraucher (4) und der erste elektrische Erzeuger (5) jeder eine Schalteinheit (10) umfassen und die Schalteinheit (10) eine Messeinheit (11) und eine Steuereinheit (12) umfasst,
- Messen der lokalen Netzspannung und Erzeugen von Netzspannungsdaten in der Messeinheit (11),
- Übertragen der Netzspannungsdaten an die Steuereinheit (12),
- Auswerten der Netzspannungsdaten in der Steuereinheit (12) und Ermitteln einer Netzspannungssollwertabweichung in der Steuereinheit (12),
- Steuern des ersten elektrischen Verbrauchers (4) und/oder des ersten elektrischen Erzeugers (5) in Abhängigkeit der Netzspannungssollwertabweichung durch die jeweilige umfasste Steuereinheit (12).

2. Verfahren zum Betreiben des Energieversorgungssystem (1) nach Anspruch 1, wobei die Netzspannungssollwertabweichung ein Über- oder Unterschreiten einer vordefinierten Netzspannung oder eines Stabilitätsspannungsbereichs beschreibt.

3. Verfahren nach Anspruch 1 oder 2, wobei das Energieversorgungssystem (1) ein zweites Energiesubsystem (20) mit wenigstens einem zweiten elektrischen Verbraucher (21) und wenigstens einem zweiten elektrischen Erzeuger (22), die miteinander elektrisch verbunden sind, umfasst, wobei der zweite elektrische Verbraucher (21) und der zweite elektrische Erzeuger (22) jeder eine Schalteinheit (10) umfassen und die Schalteinheiten (10) eine Messeinheit und eine Steuereinheit (12) umfassen, wobei die lokale Netzspannung in der Messeinheit (11) gemessen wird und Netzspannungsdaten in der Messeinheit (11) erzeugt werden und die Netzspannungsdaten an die Steuereinheit (12) übertragen werden, die Netzspannungsdaten in der Steuereinheit (12) ausgewertet werden und eine Netzspannungssollwertabweichung in der Steuereinheit (12) ermittelt wird, und der zweite elektrischen Verbraucher (21) und/oder der zweite elektrische Erzeuger (22) in Abhängigkeit der Netzspannungssollwertabweichung durch die jeweilige Steuereinheit (12) gesteuert werden.

4. Verfahren nach einem der vorhergehenden Ansprüche, wobei das erste und/oder das zweite Energiesubsystem (2, 20) wenigstens eine Energiespeichereinheit (6, 23) mit einer Schalteinheit (10), die eine Messeinheit (11) und eine Steuereinheit (12) umfasst, aufweisen und die Schalteinheit (12) in Abhängigkeit der Netzspannungssollwertabweichung die Energiespeichereinheit (6, 23) lädt oder entlädt.

5. Verfahren nach einem der vorhergehenden Ansprüche, wobei das Energieversorgungssystem (1) eine zentrale Steuereinheit (100) umfasst und die zentrale Steuereinheit (100) mit dem ersten und mit dem zweiten Energiesubsystem (2, 20) verbunden ist und in Abhängigkeit der Netzspannungssollwertabweichung ein Ansteuern der ersten und/oder zweiten Verbraucher (4, 21) und/oder der ersten und/oder zweiten Erzeuger (5, 22) und/oder der Energiespeichereinheit (6, 23) durch die zentrale Steuereinheit (100) erfolgt.

6. Verfahren nach einem der Ansprüche 3 oder 4, wobei das erste Energiesubsystem (2) und das zweite Energiesubsystem (20) über eine zentrale Kommunikationseinheit oder Peer-to-Peer kommunizieren.

7. Verfahren nach Anspruch 5 oder 6, wobei in Abhängigkeit der Netzspannungssollwertabweichung wenigstens zwei Erzeuger, Verbraucher und/oder Energiespeicher durch die zentrale Steuereinheit (100) angesteuert werden.

8. Verfahren nach einem der Ansprüche 3 bis 7, wobei das erste Energiesubsystem (2) und das zweite Energiesubsystem (20) lokal benachbart sind und das erste Energiesubsystem (2) und das zweite Energiesubsystem (20) sich gegenseitig in Abhängigkeit der Netzspannungssollwertabweichung elektrische Energie bereitstellen oder abnehmen.

9. Verfahren nach einem der Ansprüche 5 bis 8, wobei der zentralen Steuereinheit (100) Netzinfrastrukturdaten bereitgestellt werden und eine lokale Zuordnung der Netzspannungsdaten zu den Netzinfrastrukturdaten in dem Energieversorgungssystem (1) erfolgt.

10. Energieversorgungssystem (1) mit wenigstens einem erstes Energiesubsystem (2) mit wenigstens einem ersten elektrischen Verbraucher (4) und wenigstens einem ersten elektrischen Erzeuger (5), die miteinander elektrisch verbunden sind, wobei der erste elektrische Verbraucher (4) und der erste elektrische Erzeuger (5) jeder eine Schalteinheit (10) umfassen und die Schalteinheit (10) eine Messeinheit (11) und eine Steuereinheit (12) umfasst, wobei die Messeinheit (10) ausgestaltet ist, eine lokalen Netzspannung zu messen und Netzspannungsdaten zu erzeugen, an die Steuereinheit (12) zu übertragen und die Steuereinheit (12) ausgestaltet ist, die Netzspannungsdaten auszuwerten und eine Netzspannungssollwertabweichung zu ermitteln und die Steuereinheit (12) ihren ersten elektrischen Verbraucher (4) und/oder ersten elektrischen Erzeuger (5) in Abhängigkeit der Netzspannungssollwertabweichung anzusteuern.

11. Energieversorgungssystem (1) nach Anspruch 10, wobei die Schalteinheit (10) ein Umrichter, insbesondere ein leistungselektronischer Umrichter, ist.

12. Energieversorgungssystem (1) nach einem der Ansprüche 10 oder 11, umfassend wenigstens ein zweites Energiesubsystem (20) mit wenigstens einem zweiten elektrischen Verbraucher (21) und wenigstens einem zweiten elektrischen Erzeuger (22), die miteinander elektrisch verbunden sind, wobei der zweite elektrische Verbraucher (21) und der zweite elektrische Erzeuger (22) jeder eine Schalteinheit (10) umfassen und die Schalteinheit (10) eine Messeinheit (11) und eine Steuereinheit (12) umfasst, wobei die Messeinheit (11) ausgestaltet ist, eine lokalen Netzspannung zu messen und Netzspannungsdaten zu erzeugen, an die Steuereinheit (12) zu übertragen und die Steuereinheit (12) ausgestaltet ist, die Netzspannungsdaten auszuwerten und eine Netzspannungssollwertabweichung zu ermitteln und den zweiten elektrischen Verbraucher (21) und/oder zweiten elektrischen Erzeuger (22) in Abhängigkeit der Netzspannungssollwertabweichung anzusteuern, wobei das ersten Energiesubsystem (2) und das zweite Energiesubsystem (20) elektrisch verbunden sind.

13. Energieversorgungssystem (1) nach einem der Ansprüche 10 bis 12, wobei das erste und/oder das zweite Energiesubsystem (2, 20) ein Gebäude, ein Wohnviertel oder ein elektrisch zusammenhängendes Gebäudenetz ist.

14. Energieversorgungssystem (1) nach einem der Ansprüche 10 bis 13, wobei das erste und/oder das zweite Energiesubsystem (2, 20) wenigstens eine Energiespeichereinheit (6, 23) mit einer Schalteinheit (10), die eine Messeinheit (11) und eine Steuereinheit (12) umfasst, aufweist.
